# EUROPEAN PATENT APPLICATION

(11) **EP 1 655 940 A1**
(43) Date of publication of application: **10.05.2006**
(21) Application number: 04770995.1
(22) Date of filing: 28.07.2004
(51) Int. Cl.: H04M 11/06, H04M 3/00, H04L 12/66

(54) **GATEWAY DEVICE, AUDIO COMMUNICATION SYSTEM, AND AUDIO COMMUNICATION METHOD**

(30) Priority: 29.07.2003 JP 2003282078
(71) Applicant: Softbank BB Corp., Tokyo 105-7304 (JP)
(72) Inventor: SON, Masayoshi, Tokyo 106-0041 (JP)
(74) Representative: Grünecker, Kinkeldey, Stockmair & Schwanhäusser Anwaltssozietät
(86) International application number: PCT/JP2004/010732
(87) International publication number: WO 2005/011252

(57) **Abstract**

There are provided a voice communication unit 23a for voice communication with the telephone equipment 13 through the metallic cable 3, an identifier generation unit 23b for generating a caller identifier and an intended recipient identifier on the basis of a control signal from the telephone equipment 13, a conversion unit 23d for converting voice signals of voice communication into packet signals and vice versa, and a packet transmitter receiver unit 23 for transmitting and receiving packet signals on the basis of the caller identifier and the intended recipient identifier, and a determination unit 23e operable in order that the voice signals are output to the subscriber line exchange 24 without converting the voice signals into packet signals on the basis of the intended recipient identifier.

By this configuration, the facilities necessary in the subscriber's home can be simplified, and thereby it is possible to lessen the burden of installing the system, reduce the equipment expense, and dispense with the need for the installation space.

## Description

### [Field of the Invention]

The present invention relates to a gateway device placed on the site of a phone switching station, and a voice conversation system and a voice conversation method which make use of this gateway device.

### [Background Art]

In recent years, high speed communication lines have bee widely distributed, for example, by making use of metallic cables (telephone wire / copper wire) placed between a phone switching station and a subscriber's home (user) in order to implement an Asymmetric Digital Subscriber Line (ADSL) through which data communication between the end users and an Internet access provider is made. Also, as described in Japanese Patent Published Application No. Hei 2001-144854, the Internet telephone service has been provided by the use of such high speed communication lines for voice communication through the Internet on a real time base.

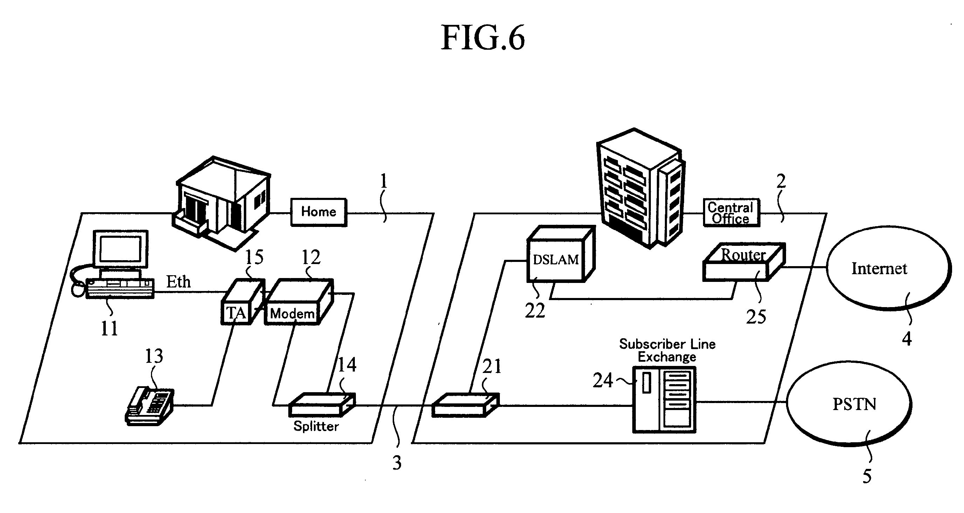

Fig. 6 is a block diagram for showing the implementation of the conventional Internet telephone service. As shown in the same figure, there are a modem 12 connected to a metallic cable 3 such as a telephone wire through a splitter 14, a general purpose computer 11 capable of performing data communication, such as a personal computer, and a telephone equipment 13 for voice conversation. The general purpose computer 11 and the telephone equipment 13 are connected to the modem 12 through a TA 15. The TA 15 is provided with a port for data communication such as a LAN port or a USB port, and a line port to which an ordinary telephone equipment can be connected, and implemented with the capability of converting voice signals into packets.

On the other hand, inside a central office of a phone switching station, there are a splitter 21 connected to the metallic cable 3, a DSLAM (Digital Subscriber Line Access Multiplexer) 22 connected to the splitter 21, and a subscriber line exchange 24 connected to the splitter 21. The DSLAM 22 is connected to the Internet 4 through a router 25, and the subscriber line exchange 24 is connected to an analog public telephone network (PSTN: Public Switched Telephone Network) 5.

In accordance with the Internet telephone as discussed above, voice signals as transmitted from the telephone equipment 13 is converted by the modem 12 into data signals which are then transmitted to the DSLAM 22 through the splitters 14 and 21 and output to the Internet 4 through the router 25. On the other hand, when the analog public telephone network 5 is used for voice conversation, the modem 12 outputs the voice signals to the splitter 14 without conversion, inputs the voice signals to the subscriber line exchange 24 in the central office 2, and transmitted the voice signals to the analog public telephone network 5.

### [Disclosure of the Invention]

However, in the case of the above Internet telephone, there is a problem that a subscriber has to provide the modem 12 and the TA 15 which are somewhat expensive in the home and must bear the cost of equipment, and in addition to this the installation space tends to increase. Particularly, for subscribers such as older persons who do not use the general purpose computer 11 but want to utilize only the Internet telephone, there is a problem that the cost-benefit performance is lowered when the Internet telephone is introduced while installation operation is troublesome.

The present invention is invented taking into consideration the above situation, and it is an object thereof to provide a gateway device placed on the site of a phone switching station, a voice conversation system and a voice conversation method in which the facilities necessary in the subscriber's home can be simplified, and thereby it is possible to lessen the burden of installing the system, reduce the equipment expense, and dispense with the need for the installation space.

In order to accomplish the object as described above according to the present invention, there are a communication line to be connected to a telephone equipment placed on the site of a subscriber; a voice communication unit operable to perform voice communication with the telephone equipment through the communication line; an identifier generation unit operable to generate a caller identifier for identifying the telephone equipment and an intended recipient identifier for identifying a communication equipment of the intended recipient of the telephone equipment on the basis of a control signal from the telephone equipment; a conversion unit operable to convert voice signals of the voice communication into packet signals and vice versa; and a packet transmitter receiver unit operable to transmit and receive the packet signals on the basis of the caller identifier and the intended recipient identifier.

In accordance with the present invention as described above, since voice signals are converted into IP packets on the site of the phone switching station, a TA and a VOIP enabled modem intended for Internet telephone are not needed at the subscriber's home, and thereby it is possible to simplify the facilities necessary in the subscriber's home, reduce the equipment expense and the cumbersome connection operation, and dispense with the need for the installation space.

In the case of the above invention, the digital signals separated from signals which are transmitted and received through the communication line are preferably transmitted and received as packet signals in the phone switching station side. In accordance with the invention as described above, it is possible to perform data communication with a general purpose computer and the like at the same time as doing voice conversation with the telephone equipment. In this case, the packetization of voice singals is performed in the central office side, and thereby only an ordinary modem is needed at the subscriber's home so that the equipment expense can be reduced.

In the case of the above invention, the voice signals are output to a subscriber line exchange in the phone switching station side without conversion into packet signals depending upon the intended recipient identifier. In accordance with the invention as described above, since it is determined in the phone switching station side whether or not the intended recipient is covered by the Internet telephone service, there is no need for a particular device capable of performing such determination, and such a device can be dispensed with at the subscriber's home.

In the case of the above invention, the phone switching station is preferably provided with a subscriber database for registering a default communication network and a communication network to be connected respectively for the subscribers in association with the intended recipient identifier, and the subscriber database is searched on the basis of the intended recipient identifier in order to select a communication network to be connected on the basis of the search result. In accordance with the invention as described above, it is possible to set the communication network (IP network, PSTN network or the like) on a priority basis individually for each subscriber, and set the communication network individually for each intended recipient in order to appropriately meet the needs of users.

### [Brief Description of the Drawings]

[Fig. 1] Fig. 1 is a block diagram for showing the entirety of a communication system in accordance with an first embodiment.
[Fig. 2] Fig. 2 is a block diagram for showing the internal configuration of the gateway device in accordance with the first embodiment.
[Fig. 3] Fig. 3 is a flow chart for showing the operation process in the case where the voice conversation is started from the subscriber's home 1.
[Fig. 4] Fig. 4 is a block diagram for showing the entirety of a communication system in accordance with a second embodiment.
[Fig. 5] Fig. 5 is a block diagram for showing the entirety of a communication system in accordance with a third embodiment.
[Fig. 6] Fig. 6 is a block diagram for showing the implementation of a conventional Internet telephone service.

### [Best Mode for Carrying Out The Invention]

Next, the best mode for carrying out the present invention will be explained with reference to drawings.

### [First Embodiment]

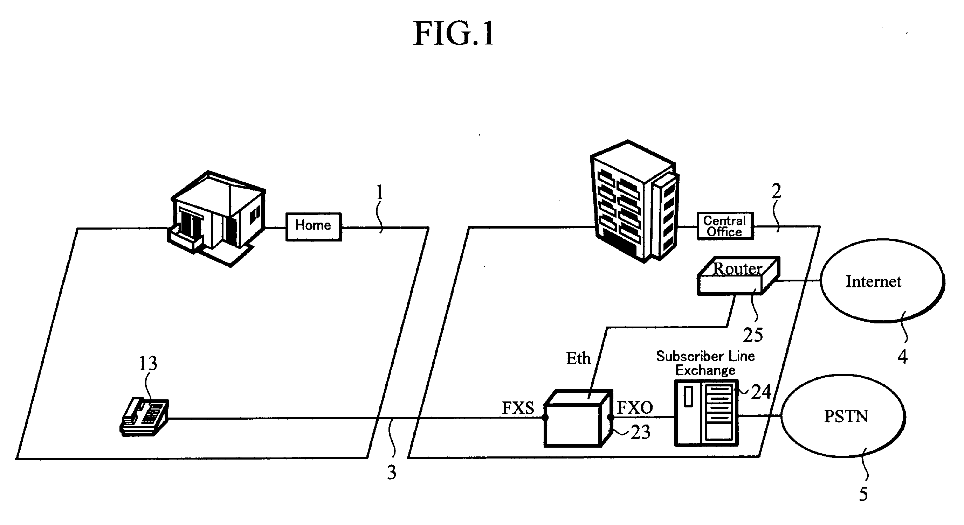

Fig. 1 is a block diagram for showing the entirety of a communication system in accordance with the first embodiment. As shown in the figure, in the case of the communication system of the present embodiment, a subscriber's home 1 and a central office 2 of a phone switching station are connected by a metallic cable 3 such as a telephone wire or a copper cable. A telephone equipment 13 is connected directly to the metallic cable 3.

On the other hand, in the central office 2, the metallic cable 3 is connected to a splitter 21, which is connected to a gateway device 23. This gateway device 23 is connected to a router 25 for connecting with the Internet 4, and connected to a subscriber line exchange 24 for connecting a public telephone network 5.

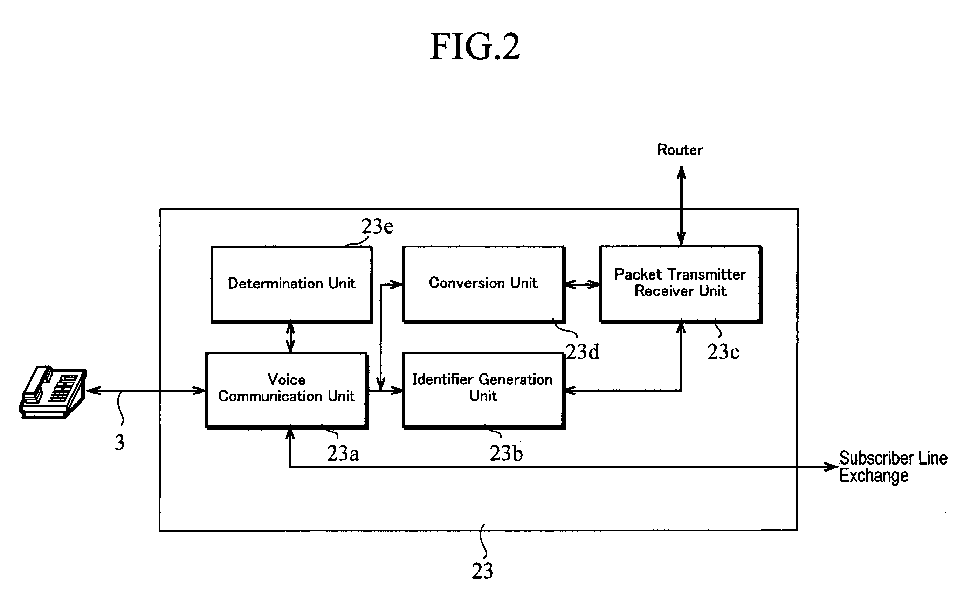

More specifically speaking, as illustrated in Fig. 2, the gateway device 23 includes a voice communication unit 23a for voice communication with the telephone equipment 13 through the metallic cable 3, an identifier generation unit 23b for generating a caller identifier and an intended recipient identifier on the basis of a control signal from the telephone equipment 13, a conversion unit 23d for converting voice signals of voice communication into packet signals and vice versa, and a packet transmitter receiver unit 23c for transmitting and receiving packet signals on the basis of the caller identifier and the intended recipient identifier, and a determination unit 23e operable in order that the voice signals are output to the subscriber line exchange 24 without converting the voice signals into packet signals on the basis of the intended recipient identifier.

The caller identifier is an IP address and the like generated on the basis of a telephone number and the like for identifying the telephone equipment 13 in the subscriber's home 1 as the caller, and the intended recipient identifier is an IP address and the like associated with the telephone number assigned to the telephone equipment of the intended recipient.

The determination unit 23e is a module for distinguishing telephone calls at the telephone numbers, such as "110" and so forth, which are not covered by the IP telephone service in order that such telephone calls are connected directly to the subscriber line exchange 24 through the voice communication unit 23a without packet conversion.

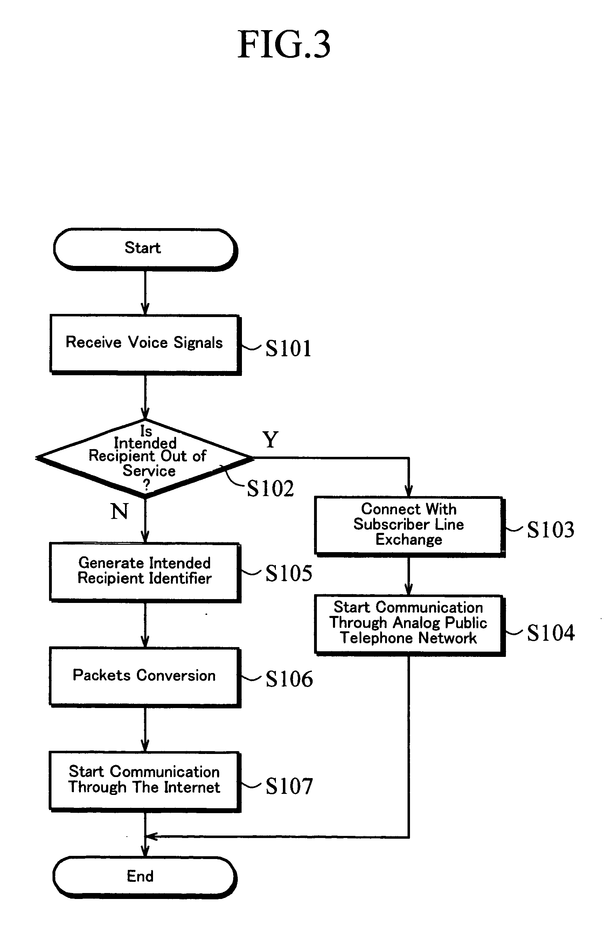

By the communication system constructed as described above, voice conversation can be done in accordance with the following operation process. Fig. 3 is a flow chart for showing the operation process in the case where the voice conversation is started from the subscriber's home 1.

At first, as shown in Fig. 3, a dial operation is done with the telephone equipment 13 in the subscriber's home 1. A communication start request signal is transmitted to the gateway device 23 in the central office 2 on the basis of this dial operation. This communication start request signal includes the caller identifier and the intended recipient identifier respectively for identifying the telephone equipment 13 and the telephone equipment of the intended recipient such as telephone numbers.

Then, when receiving voice signals in the central office 2 in step S101, the determination unit 23e of the gateway device 23 extracts the intended recipient identifier and determines whether or not the intended recipient is covered by the service in step S102. In the case where the intended recipient is not covered by the service, the determination unit 23e connects the voice communication unit 23a directly to the subscriber line exchange 24 in step S103 in order that voice communication is started through the analog public telephone network 5 without packet conversion in step S104.

On the other hand, in the case where it is determined that the intended recipient is covered by the service in step S102, the intended recipient identifier is generated by the identifier generation unit 23b on the basis of the telephone number of the intended recipient in step S105, and the voice signals are converted by the conversion unit 23d into IP packets in step S106. The packets as converted are output to the router 25 by the packet transmitter receiver unit 23c, and communication is started through the Internet 4 in step S107.

In accordance with the communication system of the present embodiment as has been discussed above, since voice signals are converted into IP packets inside the central office, a TA and a VOIP enabled modem intended for Internet telephone are not needed at the subscriber's home, and thereby it is possible to simplify the facilities necessary in the subscriber's home, reduce the equipment expense and the cumbersome connection operation, and dispense with the need for the installation space.

### [Second Embodiment]

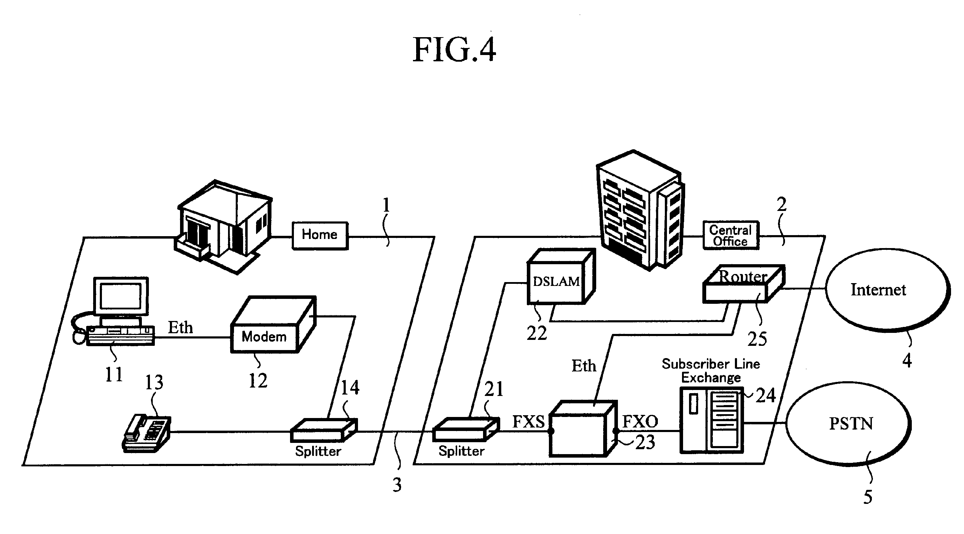

Next, the second embodiment of the present invention will be explained. Fig. 4 is a block diagram for showing the entirety of a communication system in accordance with the second embodiment. The system configuration of the present embodiment will be explained in which data communication is performed in addition to the operation of the first embodiment as described above.

As shown in Fig. 4, a splitter 14 is installed in the subscriber's home 1, and a telephone equipment 13 and a modem 12 are connected to this splitter 14. The modem 12 may be an ordinary modem for data communication, which is not provided with a VOIP capability, and a general purpose computer 11 is connected to the modem 12.

On the other hand, inside the central office 2, there are a splitter 21 connected to a metallic cable 3, a DSLAM (Digital Subscriber Line Access Multiplexer) 22 connected to the splitter 21, and a gateway device 23 connected to the splitter 21. The DSLAM 22 is an access multiplexer provided for transmitting and receiving the digital signals separated as packet signals from signals which are transmitted and received through the metallic cable 3, and connected to the Internet 4 through the router 25, while the gateway device 23 is connected to an analog public telephone network (PSTN: Public Switched Telephone Network) 5 through a subscriber line exchange 24.

The splitters 14 and 21 are provided at the opposite ends of the asymmetric digital subscriber line (at the subscriber's home 1 and the central office 2) as frequency branching filters capable of merging and separating analog voice signals (telephone signals) and ADSL data communication signals, in the same manner as conventional splitters. The data communication signals which are frequency separated in the central office 2 are output to the DSLAM 22 while the analog voice signals are output to the gateway device 23.

When voice conversation is done by the communication system constructed as described above, communication through the Internet 4 is performed, in the same manner as in the first embodiment of the present invention as described above, by performing a dial operation with the telephone equipment 13 at the subscriber's home 1 for transmitting and receiving voice signals through the splitters 14 and 21, and determining whether or not the intended recipient is covered by the service at the central office 2 in order that if the intended recipient is not covered by the service the call is connected directly to the subscriber line exchange 24 without packet conversion to enable voice communication through the analog public telephone network 5, and if the intended recipient is covered by the service the voice signals are converted into IP packets to enable communication through the Internet 4.

In addition, when data communication is performed, the data signals (IP packets) from the general purpose computer 11 are transmitted to the central office 2 through the modem 12 and the splitters 14 and 21. Data signals are separated by the splitter 21 and input to the DSLAM 22 in the central office 2. The DSLAM 22 transmits the IP packets to the Internet 4 through the router 25 on the basis of the header information of the IP packets.

In accordance with the communication system of the present embodiment as described above, it is possible to perform data communication with the general purpose computer 11 at the same time as doing voice conversation with the telephone equipment 13. In this case, the packetization of voice singals is performed by the gateway device 23 in the central office 2, and thereby only the ordinary modem 12 is needed at the subscriber's home 1 so that the equipment expense can be reduced.

Meanwhile, while the DSLAM 22 and the gateway device 23 are provided in the central office 2 as separate devices in accordance with this second embodiment of the present invention, the present invention is not limited thereto but can be implemented with a device in which the function of the DSLAM and the function of the gateway device are integrated, if desired, also together with the function of the splitter 21. In this case, it is possible to reduce the installation space in the central office 2.

### [Third Embodiment]

Next, the third embodiment of the present invention will be explained. The present embodiment is characterized in that, in addition to the operations of the first and second embodiments as described above, a plurality of types of communication lines such as analog communication lines, ISDN lines and so forth can be connected, and a communication network (the Internet 4 or the PSTN 5) can be set separately for the respective subscribers.

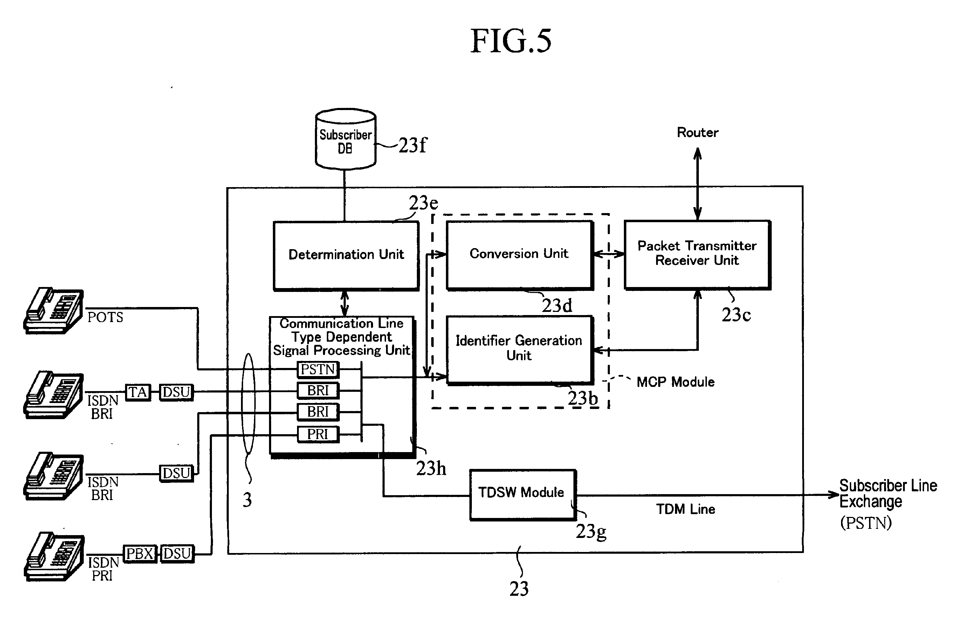

More specifically speaking, as illustrated in Fig. 5, there are a communication line type dependent signal processing unit 23h operable to separately process signals for the respective communication lines in place of the above voice communication unit 23a, and a subscriber database 23f provided for the above determination unit 23e to assign the subscribers respectively to connection devices.

In the present embodiment, the metallic cable 3 can be a cable for POTS (Plain Old Telephone Service) that is a conventional low frequency analog communication line, or a single physical cable over which a plurality of virtual communication lines (channels) are supported. On the other hand, the telephone equipments 13 connected respectively to the communication lines can be ordinary analog telephone equipments, analog and/or ISDN telephone equipments connected through a terminal adapter and a DSU (Digital Service Unit), and/or extension telephones such as multifunction telephone equipments connected through the PBX (Private Branch exchange).

The communication line type dependent signal processing unit 23h is a collection of modules capable of converting voice data (signals) into packet data (digital signals) and vice versa for the respective types of the communication lines as described above. These modules include a PSTN module connected to POTS, a BRI module connected to ISDN BRI and an ISDN module connected to ISDN PRI.

Also, in the case of the present embodiment, the communication line type dependent signal processing unit 23h has a port for the Internet 4 which is connected to an MCP module while the MCP module comprises the conversion unit 23d and the identifier generation unit 23b as described in the above embodiment. Furthermore, the communication line type dependent signal processing unit 23h has a port for the PSTN 5 which is connected to a TDSW module while this TDSW module 23g serves to perform a time division multiplexing process. Also, the communication line type dependent signal processing unit 23h is provided with the capability of connecting a call from an ISDN terminal for data communication to a TDM communication line, the capability of making a bypass connection, when a failure occurs in either communication line via the Internet 4 or via the PSTN 5, through the other communication line, and other necessary capabilities.

The above subscriber database 23f is a database for registering the identifiers of subscribers (telephone numbers, IP addresses and the like) respectively in association with the types of the communication network to be connected (the Internet 4 or the PSTN 5), and returning the result of searching the database in response to a request from the determination unit 23e. The contents to be registered in this subscriber database 23f include default settings of the communication network to be connected (the Internet 4 or the PSTN 5) for the respective subscribers and settings of the communication network in association with the dialled telephone numbers.

Then, like the voice communication unit 23a in accordance with the embodiment as described above, the communication line type dependent signal processing unit 23 selects the communication network to be connected (the Internet 4 or the PSTN 5), when an outgoing call process is performed, in accordance with the determination by the determination unit 23e on the basis of the dialled telephone number, and connects the interface of the communication network as selected (the MCP module or the TDSW module 23g) to the telephone equipment 13 of the subscriber in order to perform the signal processing in accordance with the type of the communication line. On the other hand, when the incoming call process is performed, the communication line type dependent signal processing unit 23 selects the destination terminal in accordance with the incoming signals (the intended recipient dialled number, the intended recipient IP address) from the Internet 4 or the PSTN 5, and performs signal processing in accordance with the type of the communication line of the intended recipient as selected.

### [Industrial Applicability]

As has been discussed above, in accordance with the gateway device, the voice conversation system and the voice conversation method of the present invention, the equipment expense required when the system is installed can be reduced by simplifying the facilities necessary in the subscriber's home, and the need for the installation space can be dispensed with.

## Claims

1. A gateway device placed on the site of a phone switching station, comprising:
a communication line to be connected to a telephone equipment placed on the site of a subscriber;
a voice communication unit operable to perform voice communication with said telephone equipment through said communication line;
an identifier generation unit operable to generate a caller identifier for identifying said telephone equipment and an intended recipient identifier for identifying a communication equipment of the intended recipient of said telephone equipment on the basis of a control signal from said telephone equipment;
a conversion unit operable to convert voice signals of said voice communication into packet signals and vice versa; and
a packet transmitter receiver unit operable to transmit and receive said packet signals on the basis of said caller identifier and said intended recipient identifier.

2. The gateway device as claimed in claim 1 further comprising: a determination unit operable in order that said voice signals are output to a subscriber line exchange without conversion into packet signals depending upon said intended recipient identifier.

3. The gateway device as claimed in claim 1 wherein said determination unit is provided with a subscriber database for registering a default communication network and a communication network to be connected respectively for said subscribers in association with said intended recipient identifier, and searches said subscriber database on the basis of said intended recipient identifier in order to select a communication network to be connected on the basis of the search result.

4. A voice conversation system for use in voice conversation through a phone switching station with a telephone equipment placed on the site of a subscriber, comprising:
a communication line to be connected to a telephone equipment placed on the site of a subscriber;
a voice communication unit operable in the phone switching station side to perform voice communication with said telephone equipment through said communication line;
an identifier generation unit operable in the phone switching station side to generate a caller identifier for identifying said telephone equipment and an intended recipient identifier for identifying a communication equipment of the intended recipient of said telephone equipment on the basis of a control signal from said telephone equipment;
a conversion unit operable to convert voice signals of said voice communication into packet signals and vice versa; and
a packet transmitter receiver unit operable in the phone switching station side to transmit and receive said packet signals on the basis of said caller identifier and said intended recipient identifier.

5. The voice conversation system as claimed in claim 4 further comprising an access multiplexer operable to transmit and receive the digital signals separated as packet signals from signals which are transmitted and received through said communication line.

6. The voice conversation system as claimed in claim 4 further comprising a determination unit operable in order that said voice signals are output to a subscriber line exchange without conversion into packet signals depending upon said intended recipient identifier.

7. The voice conversation system as claimed in claim 6 wherein said determination unit is provided with a subscriber database for registering a default communication network and a communication network to be connected respectively for said subscribers in association with said intended recipient identifier, and searches said subscriber database on the basis of said intended recipient identifier in order to select a communication network to be connected on the basis of the search result.

8. A voice conversation method for use in voice conversation through a phone switching station with a telephone equipment placed on the site of a subscriber, comprising:
a step of transmitting and receiving voice signals in the phone switching station side through a communication line connected to said telephone equipment;
a step of generating a caller identifier for identifying said telephone equipment and an intended recipient identifier for identifying a communication equipment of the intended recipient of said telephone equipment on the basis of a control signal from said telephone equipment, and converting voice signals of said voice communication into packet signals and vice versa in the phone switching station side; and
a step of transmitting and receiving said packet signals on the basis of said caller identifier and said intended recipient identifier in the phone switching station side.

9. The voice conversation method as claimed in claim 8 wherein the digital signals separated from signals which are transmitted and received through said communication line are transmitted and received as packet signals in the phone switching station side.

10. The voice conversation method as claimed in claim 8 wherein said voice signals are output to a subscriber line exchange in the phone switching station side without conversion into packet signals depending upon said intended recipient identifier.

11. The voice conversation method as claimed in claim 8 wherein, in the phone switching station side, a subscriber database is provided for registering a default communication network and a communication network to be connected respectively for said subscribers in association with said intended recipient identifier, and
said subscriber database is searched on the basis of said intended recipient identifier in order to select a communication network to be connected on the basis of the search result.
